# EUROPEAN PATENT SPECIFICATION

(11) **EP 3 197 117 B1**
(45) Date of publication and mention of the grant of the patent: **18.12.2019**
(21) Application number: 14884279.2
(22) Date of filing: 16.12.2014
(51) Int. Cl.: H04L 29/06

(54) **COMMUNICATION PROCESSOR, METHOD OF IMPLEMENTING VOLTE, MOBILE TERMINAL, DATA CARD**
KOMMUNIKATIONSVERFAHREN, VERFAHREN ZUR IMPLEMENTIERUNG VON VOLTE, MOBILES ENDGERÄT, DATENKARTE
PROCESSEUR DE COMMUNICATION, PROCÉDÉ DE MISE EN UVRE DE VOLTE, TERMINAL MOBILE, CARTE DE DONNÉES

(30) Priority: 17.09.2014 CN 201410474292
(43) Date of publication of application: 26.07.2017
(73) Proprietor: ZTE Corporation, Shenzhen, Guangdong 518057 (CN)
(72) Inventor: CHEN, Guang, Shenzhen Guangdong 518057 (CN)
(74) Representative: Bandpay & Greuter
(86) International application number: PCT/CN2014/094001
(87) International publication number: WO 2015/131608

(56) References cited:
- CN-A- 103 177 729
- CN-A- 103 647 764
- CN-A- 103 647 764
- US-A1- 2013 308 620
- US-A1- 2013 308 620
- US-A1- 2013 337 864
- US-A1- 2013 340 047

## Description

### Technical Field

The present invention mainly relates to the field of embedded mobile terminals, and in particular to a communication processor, a method of implementing Voice over Long Term Evolution, VoLTE, a mobile terminal and a data card.

### Background

The voice call of a mobile terminal in a 2G/3G network is realized by means of Circuit Switch (referred to as CS, interacting information based on a circuit). The LTE 4G network merely supports Packet Switch (referred to as PS, interacting information based on packet switch) data communication services and does not support CS voice call. Thus, in LTE 4G single-network, it is required to use PS-based Voice over Long Term Evolution, VoLTE, technology, and packet data switch mode is used to realize LTE 4G voice call. In a 2G/3G/4G hybrid-network, CS voice call can be realized by falling back to the 2G/3G network through Circuit Switched Fallback, CSFB.

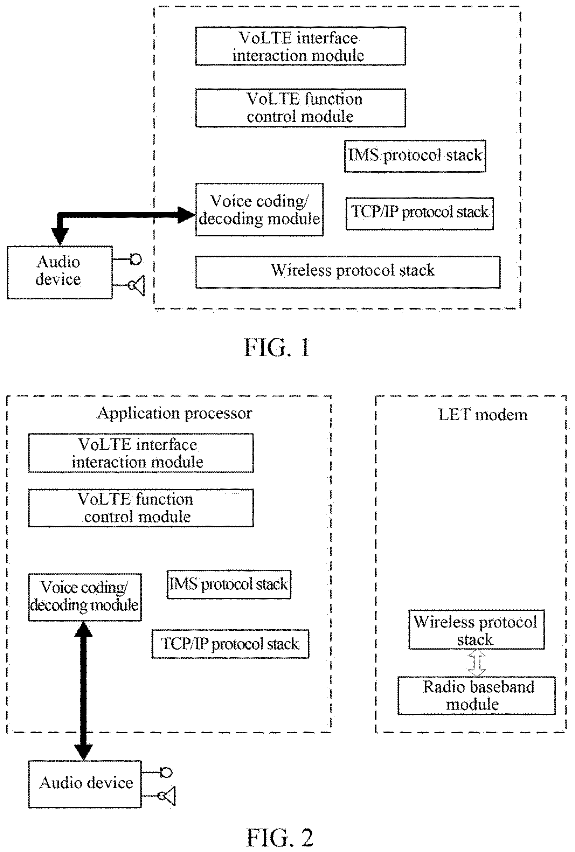

VoLTE voice call software modules of the mobile terminal are as shown in Fig. 1. The VoLTE voice call software module includes a VoLTE interface interaction module, a VoLTE function control module, an IP Multimedia Subsystem, IMS, protocol stack and a voice coding/decoding module.

In addition, the VoLTE voice call software module also requires the underlying transmission support of a Transmission Control Protocol/Internet Protocol, TCP/IP, protocol stack and a wireless protocol stack and the support of an audio device playing/capturing user voice.

The VoLTE interface interaction module is in charge of user interaction and interface displaying, for example, the VoLTE interface interaction module displays a VoLTE available state; acquires an operation of a user dialing and answering a VoLTE voice call and transmits the operation to the VoLTE function control module; and at the same time, the VoLTE interface interaction module receives a VoLTE voice incoming call message reported by the underlying layer and notifies the user through interface displaying and ringing.

The VoLTE function control module is in charge of implementing the VoLTE function. The VoLTE function includes the following functions.
1) A wireless access management function: the wireless access management function refers to acquiring the VoLTE network state by interacting with the LTE MODEM wireless protocol stack, maintaining the VoLTE network state and managing the establishment and disconnection of the IMS specific data connection link between the mobile terminal and the VoLTE network.
2) A VoLTE service function; the VoLTE service function refers to maintaining the VoLTE available state of the mobile terminal in the VoLTE network by interacting with the IMS protocol stack and providing the function of initiating and answering the VoLTE voice call.
3) A VoLTE voice call audio control function: the VoLTE voice call audio control function refers to controlling the "enable" and "disable" of the voice coding/decoding module by interacting with the voice coding/decoding module and adjusting the voice volume of the VoLTE call.

The IMS protocol stack is the core protocol stack of VoLTE voice call and in charge of transmitting and processing VoLTE network interaction signalling and VoLTE audio multimedia TCP/IP data package.

The entire VoLTE voice call is divided into a signalling negotiation phase and a voice call multimedia interaction phase. At the VoLTE voice call signalling negotiation phase, the IMS protocol stack is in charge of receiving a request from the local-end VoLTE function control module and performing VoLTE signalling interaction negotiation with a remote-end device. After the VoLTE call signalling negotiation is completed, it proceeds to the voice call multimedia interaction phase. In the voice call multimedia interaction phase, the IMS protocol stack is in charge of transceiving and processing VoLTE audio multimedia data packages. The VoLTE audio multimedia data package transmitted from the remote-end user is split and transmitted to the voice coding/decoding module for audio decoding processing. At the same time, the local-end user voice coding data transmitted from the voice coding/decoding module are packaged as a VoLTE audio multimedia data package and transmitted to the remote-end user through the TCP/IP network.

The voice coding/decoding module is in charge of decoding and optimizing the VoLTE multimedia data package transmitted from the IMS protocol stack and then transmitting to the audio device (earphone/loudspeaker and so on) for playing. At the same time, the local-end user voice data transmitted from the audio device microphone, MIC, are coded and translated as a VoLTE multimedia data package to transmit to the IMS protocol stack, and finally transmitted to the remote-end user through the TCP/IP network.

The TCP/IP protocol stack is in charge of transceiving the VoLTE signalling and voice multimedia TCP/IP data package.

The wireless protocol stack is in charge of establishing and disconnecting a connection link of the IMS specific data between the mobile terminal and the VoLTE network, and providing the underlying layer transceiving transmission function of the VoLTE signalling and multimedia data package.

In the current 4G mobile terminal implementation, the VoLTE voice function is realized based on application processor, AP, and the android operating system.

Fig. 2 shows a VoLTE implementation scheme based on AP of a mobile terminal. A VoLTE interface interaction module, a VoLTE function control module, an IMS protocol stack, a TCP/IP protocol stack and a voice coding/decoding module in a multimedia framework are included in the AP, and the LTE MODEM provides a wireless protocol stack and a radio frequency baseband module.

It can be seen that the AP VoLTE implementation scheme has the following defects.
1) It is not beneficial for saving electricity. The major VoLTE voice function modules operate in the AP, and for example, in VoLTE voice call, after the VoLTE voice call of the smart phone is in black screen, the AP still needs to operate the IMS protocol and cannot come into deep sleep.
2) It is not beneficial for the stabilization and promotion of the VoLTE function in the mobile terminal. The VoLTE wireless access management function in the VoLTE function control module needs to perform different transplant and adaption works for different LTE MODEM wireless protocol stacks from different manufacturers. Since different MODEM LTE Attention, AT, commands are different quite a lot, simple transplant cannot be performed and customization has to be re-performed according to different LTE MODEMs. In addition, since the VoLTE function control module is implemented in the AP, for different AP operating systems, the implementation modes are different. For example, in an Android platform, the codes of the module are generally compiled in JAVA language, and in a Windows embedded system, the codes of the module are generally compiled in C language.
3) It is not beneficial for the development of the 4G/5G mobile terminal. High-speed TCP/IP data package communication support is required between the AP and the Communication Processor, CP, and the AP/CP transmission performance has to be taken into account.

CN 103647764 A discloses a method for implementing LTE system voice business and a single-chip terminal.

US 20130337864 A1 discloses a distributed services modular client architecture may be used to implement IP-based real time communication services in a flexible manner among a wide variety of different types of chip sets and systems-on-chip.

### Summary

Embodiments of the present application provide a VoLTE implementation scheme which can support different product modalities, reduce power consumption, and reduce the communication device requirements between the AP and the CP.

The present application provides a communication processor, CP according to claim 1, a mobile terminal according to claim 2, a data card according to claims 7 and 8 respectively and a method of implementing voice over long term evolution, VoLTE according to claim 9.

Also provided is a communication processor, CP, applied to an LTE modem, including a wireless protocol stack entity, a voice over long term evolution, VoLTE, function control module, a voice coding/decoding module, an Internet Protocol Multimedia Subsystem, IMS, protocol stack entity, and a Transmission Control Protocol/Internet Protocol, TCP/IP, protocol stack entity.

The VoLTE function control module is arranged to interact control messages with the voice coding/decoding module, the IMS protocol stack entity, and the wireless protocol stack entity respectively; the TCP/IP protocol stack entity is arranged to interact TCP/IP data with the wireless protocol stack entity and the IMS protocol stack entity respectively; and the voice coding/decoding module is arranged to interact audio data and a control message with an external voice device, and interact audio data with the IMS protocol stack entity.

In an exemplary embodiment, the VoLTE function control module is arranged to send a control message for indicating to display a specific content through an interface of the LTE modem and receive a control message for indicating to perform a specific VoLTE operation.
In an exemplary embodiment, the interface of the LTE modem is an AT command interface.

Also provided is a mobile terminal, including: an application processor, AP, and the above communication processor, CP.

Herein, the AP includes: a VoLTE interface interaction module.

The VoLTE function control module is arranged to interact a control messages with the VoLTE interface interaction module.

In an exemplary embodiment, the VoLTE function control module is arranged to: notify the wireless protocol stack entity to receive a VoLTE network access notification, and establish a connection link of IMS specific data when receiving the VoLTE network access notification sent by the wireless protocol stack entity, register a mobile terminal VoLTE voice function to the VoLTE network through the IMS specific data connection, and notify the VoLTE interface interaction module to display a VoLTE voice function available state of a mobile terminal after completing registration.

In an exemplary embodiment, the VoLTE function control module is arranged to: notify the wireless protocol stack entity to receive a notification that the mobile terminal leaves a VoLTE network service area and the IMS specific data connection is disconnected, initiate a VoLTE voice function cancellation procedure of a mobile terminal after receiving the notification of leaving the VoLTE network service area sent by the wireless protocol stack entity, notify the VoLTE interface interaction module to remove displaying of the VoLTE voice function available state after completing cancellation; and notify the VoLTE interface interaction module to remove the displaying of the VoLTE voice function available state after receiving the notification that the IMS specific data connection is disconnected.

In an exemplary embodiment, the VoLTE interface interaction module is arranged to notify the VoLTE function control module when a user initiates a VoLTE voice call operation or when the user initiates a hang-up VoLTE call request operation.

The VoLTE function control module is arranged to, when receiving the notification of initiating the VoLTE voice call operation, initiate VoLTE voice call IMS protocol signalling negotiation to the VoLTE network through the IMS protocol stack entity, the TCP/IP protocol stack entity and the wireless protocol stack entity; notify the VoLTE interface interaction module to display a VoLTE voice call connected state after receiving the notification that the remote-end user has answered the VoLTE voice call sent by the VoLTE network through the TCP/IP protocol stack entity, the wireless protocol stack entity and the IMS protocol stack entity and enable the audio coding/decoding module; when receiving the notification of hanging up the VoLTE voice call operation, initiate VoLTE voice call hang-up signalling negotiation to the VoLTE network through the IMS protocol stack entity, the wireless protocol stack entity and the TCP/IP protocol stack entity; disable the audio coding/decoding module and notify the VoLTE interface interaction module to prompt the user that the VoLTE voice call is ended after receiving the notification that the VoLTE voice call is disconnected sent by the VoLTE network through the TCP/IP protocol stack entity, the wireless protocol stack entity and the IMS protocol stack entity.

The audio coding/decoding module is arranged to: perform audio decoding on an audio multimedia data package transmitted by the VoLTE network and split by the IMS protocol stack entity and then transmit to the connected audio device; and code the voice transmitted by the connected audio device and then transmit to the IMS protocol stack entity, and package the coded voice as an audio multimedia data package to transmit to the VoLTE network.

In an exemplary embodiment, the VoLTE function control module is arranged to, after receiving a notification of a VoLTE voice incoming call sent by the VoLTE network through the wireless protocol stack entity, the TCP/IP protocol stack entity and the IMS protocol stack entity, notify the VoLTE interface interaction module to prompt that there is a VoLTE voice incoming call; after receiving a notification sent by the VoLTE interface interaction module that the user has answered, notify the user of the VoLTE network to answer the VoLTE voice call through the IMS protocol stack entity, the TCP/IP protocol stack entity and the wireless protocol stack entity, and enable the audio coding/decoding module; and

The audio coding/decoding module is arranged to: perform audio decoding on an audio multimedia data package transmitted by the VoLTE network and split by the IMS protocol stack entity and then transmit to the connected audio device; and code the voice transmitted by the connected audio device and then transmit to the IMS protocol stack entity, and package the coded voice as an audio multimedia data package by the IMS protocol stack entity to transmit to the VoLTE network.

Also provided is a data card, including: the above communication processor, CP.

The CP further includes:
an audio device arranged to be connected to the voice coding/decoding module and interact a control message and audio data.

Also provided is a data card, including: the above communication processor, CP.

The CP further includes:
a USB interface arranged to be connected to the voice coding/decoding module and interact audio data and also arranged to be connected to a USB interface of other device.

Also provided is a method of implementing voice over long term evolution, VoLTE, including the following steps.

A VoLTE function control module in a communication processor, CP, interacts control messages with a voice coding/decoding module, a wireless protocol stack entity and an IMS protocol stack entity in the CP respectively.

The wireless protocol stack entity interacts TCP/IP data with a TCP/IP protocol stack entity in the CP.

The TCP/IP protocol stack entity interacts TCP/IP data with the IMS protocol stack entity.

The IMS protocol stack entity interacts audio data with the voice coding/decoding module.

The voice coding/decoding module interacts audio data and control messages with an external audio device.

An embodiment of the present invention also provides a computer program implementing the above method.

An embodiment of the present invention also provides a computer-readable storage medium storing the computer program.

The embodiments of the present invention provide a VoLTE implementation scheme based on LTE MODEM CP of a mobile terminal. The implementation scheme migrates the main VoLTE voice function modules into MODEM CP chip software for implementation. There are the following advantages.
1) During VoLTE voice call, the LTE MODEM CP is originally always in an operating state and does not sleep. At this moment, the LTE MODEM CP processes the IMS protocol, performs voice coding/decoding, directly interacts with an external audio device (MIC, earphone, loudspeaker) without the participation of the AP CPU. Thus, during the VoLTE voice call, the AP can come into deep sleeping, achieving a purpose of saving electricity.
2) The VoLTE function control module and the wireless protocol stack entity are integrated in one LTE MODEM CP chip processor for coding, and can be solidified into the LTE MODEM CP chip software. But the VoLTE function control module and the wireless protocol stack entity still provide an AT command interface for the outside and can be implanted on different platforms rapidly, and thus can support different product modalities (smart phone, data card, embedded 4G wireless device).
3) The high speed communication of TCP/IP data packages between the AP and the CP can be reduced and the communication device requirements between the AP and the CP can also be reduced.

### Brief Description of Drawings

Fig. 1 is an architecture schematic diagram of a VoLTE function software modules of a mobile terminal.
Fig. 2 is a schematic diagram of a VoLTE implementation scheme based on AP of a mobile terminal.
Fig. 3 is a schematic diagram of a VoLTE implementation scheme based on CP of a mobile terminal.
Fig. 4 is a schematic diagram of a VoLTE implementation scheme of self-contained audio device data card.
Fig. 5 is a schematic diagram of a VoLTE implementation scheme of non-self-contained audio device data card.

### Detailed Description

Hereinafter, the technical solution of the present invention will be described in detail in conjunction with the accompanying drawings and embodiments.

It should be noted that the embodiments of the present invention and various features in the embodiments can be combined with each other without conflicts and all fall into the protection scope of the present invention. In addition, although the logic order is shown in the flowchart, in some cases, the illustrated or described steps can be performed in a different order.

In embodiment one, a communication processor, CP, applied to an LTE MODEM, includes: a VoLTE function control module, a voice coding/decoding module, a wireless protocol stack entity, an IMS protocol stack entity and a TCP/IP protocol stack entity.

The VoLTE function control module interacts control messages with the voice coding/decoding module, the IMS protocol stack entity, and the wireless protocol stack entity respectively. The TCP/IP protocol stack entity interacts TCP/IP data with the wireless protocol stack entity and the IMS protocol stack entity respectively. The voice coding/decoding module interacts audio data and control messages with an external audio device, and interacts audio data with the IMS protocol stack entity.

The embodiment provides an LTE MODEM CP embedded with a VoLTE voice function, which can be applied to products with different modalities and may also support PC+ LTE MODEM data card except supporting android/windows AP+ LTE MODEM CP smart phone product development.

In the embodiment, through an interface of the LTE modem, the VoLTE function control module may send a control message for indicating to display a specific content and receive a control message for indicating to perform a specific VoLTE operation.

In the embodiment, the interface of the LTE modem may be, but is not limited to, an AT command interface.

For example, when the CP is applied to a mobile terminal, the CP can be connected to the AP in the mobile terminal through the AT command interface, so that the VoLTE interface interaction module in the AP can display the corresponding VoLTE voice call message (for example, capable of carrying out VoLTE voice call, receiving VoLTE call and so on) to the user. In addition, the control message returned by the VoLTE interface interaction module according to the operation of the user may be received through the AT command interface (such as initiating, answering and hanging up VoLTE voice call and so on) to the VoLTE function control module.

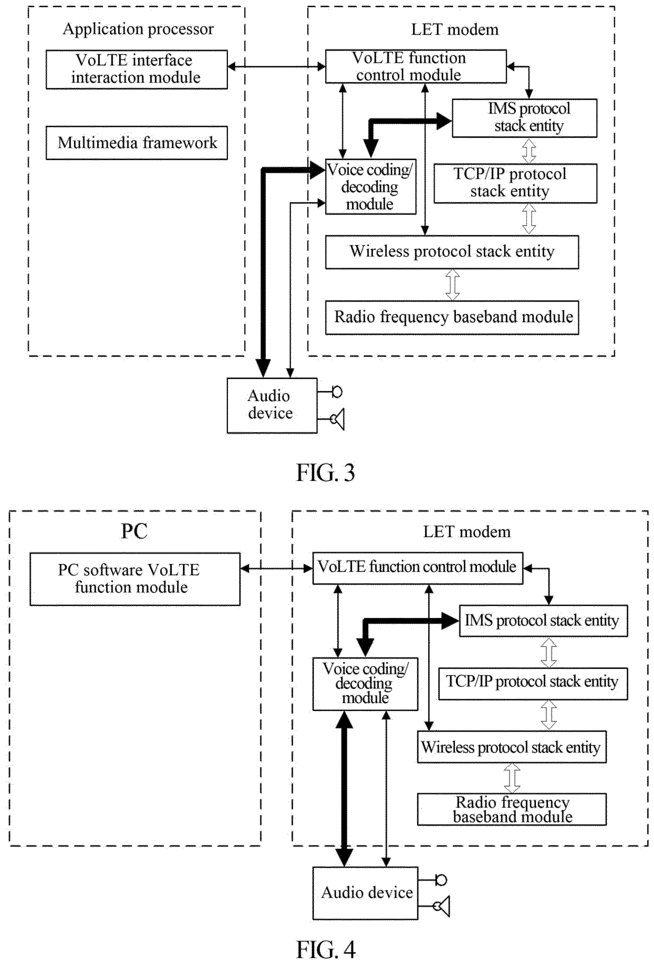

In embodiment two, a mobile terminal for implementing VoLTE voice, as shown in Fig. 3, includes an AP and the CP mentioned in embodiment one.

Herein, the AP includes a VoLTE interface interaction module.

The VoLTE function control module interacts control messages with the IMS protocol stack entity, the wireless protocol stack entity and the VoLTE interface interaction module. The TCP/IP protocol stack entity interacts TCP/IP data with the wireless protocol stack entity and the IMS protocol stack entity. The voice coding/decoding module interacts audio data and control messages with an audio device, and interacts audio data with the IMS protocol stack entity.

The embodiment is a VoLTE implementation scheme based on LTE MODEM CP of a mobile terminal. The major VoLTE voice function modules are integrated in the LTE MODEM CP for implementation. The CP may also include a radio frequency baseband module interacting TCP/IP data with the wireless protocol stack entity.

The scheme in Fig. 3 describes necessary procedures of implementing the VoLTE voice call function, including procedures of VoLTE voice function registration and cancellation, VoLTE voice calling and VoLTE voice being called.

### First, VoLTE voice function registration procedure

In step 101, the VoLTE function control module notifies the wireless protocol stack entity to receive a VoLTE network access notification.

In step 102, when the mobile terminal enters into a VoLTE network service area, the wireless protocol stack entity accesses the VoLTE network and notifies the registered VoLTE function control module to establish a connection link of IMS specific data.

In step 103, the VoLTE function control module registers a mobile terminal VoLTE voice function to the VoLTE network through the IMS specific data connection after completing the establishment of the IMS specific data connection.

In step 104, after completing the registration of the VoLTE voice function, the VoLTE function control module notifies the VoLTE interface interaction module to display a VoLTE voice function available state of the mobile terminal and indicates to the user that a VoLTE voice call may be initiated at this moment.

### Second, VoLTE voice function cancellation procedure

In step 201, the VoLTE function control module notifies the wireless protocol stack entity to receive a notification that the mobile terminal leaves the VoLTE network service area and the IMS specific data connection is disconnected.

In step 202, when the mobile terminal leaves the VoLTE network service area, the wireless protocol stack entity notifies the registered VoLTE function control module to initiate a VoLTE voice function cancellation procedure of the mobile terminal.

In step 203, after completing the cancellation of the VoLTE voice function, the VoLTE function control module notifies the VoLTE interface interaction module to remove the displaying of the VoLTE voice function available state and indicates to the user that a VoLTE voice call cannot be initiated at this moment.

After step 201, there may be another branch steps except steps 202 and 203:
In step 204, if the mobile terminal suddenly losses the VoLTE network service or the IMS specific data connection is disconnected suddenly, the wireless protocol stack entity notifies the VoLTE function control module that the IMS specific data connection is disconnected.
In step 205, after clearing the internal state, the VoLTE function control module notifies the VoLTE interface interaction module to remove the displaying of the VoLTE voice function available state and indicates to the user that a VoLTE voice call cannot be initiated at this moment.

### Third, initiating VoLTE voice call procedure

In step 301, in the VoLTE voice function available state, the user initiates a VoLTE voice call operation, and the VoLTE interface interaction module notifies the VoLTE function control module to initiate a VoLTE voice call.

In step 302, the VoLTE function control module initiates VoLTE voice call IMS protocol signalling negotiation and VoLTE protocol signalling negotiation to the VoLTE network through the IMS protocol stack entity, the TCP/IP protocol stack entity and the wireless protocol stack entity.

In step 303, the VoLTE network notifies the remote-end VoLTE mobile terminal to ring to prompt the remote-end user that there is a VoLTE voice incoming call. At the same time, the VoLTE network notifies the local-end VoLTE function control module to prompt that ringing is performed at the remote-end user through the TCP/IP protocol stack entity, the wireless protocol stack entity and the IMS protocol stack entity.

In step 304, after the remote-end user has answered, the VoLTE network notifies the VoLTE function control module that the remote-end user has answered the VoLTE voice call through the TCP/IP protocol stack entity, the wireless protocol stack entity and the IMS protocol stack entity.

In step 305, the VoLTE function control module notifies the VoLTE interface interaction module to display the VoLTE voice call connected state and completes the VoLTE voice call IMS protocol signalling negotiation.

In step 306, the VoLTE function control module enables the audio coding/decoding module to make the audio coding/decoding module enter into a VoLTE voice calling state. The IMS protocol stack entity continuously splits the audio multimedia data packages transmitted from the VoLTE network and transmits to the voice coding/decoding module for audio decoding and then transmits to the earphone/loudspeaker for playing. At the same time, the voice coding/decoding module continuously codes the voice transmitted from the local-end MIC and then transmits the coded voice to the IMS protocol stack entity, and the IMS protocol stack entity packages the coded voice as an audio multimedia data package and transmits the audio multimedia data package to the VoLTE network. The remote-end VoLTE mobile terminal performs a similar operation and realizes the VoLTE voice call between the local-end user and the remote-end user.

In step 307, during calling, the local-end user may initiate a hang-up VoLTE communication request through the VoLTE interface interaction module.

In step 308, the VoLTE interface interaction module notifies the VoLTE function control module that the user has hanged up the call, and the VoLTE function control module initiates VoLTE voice call hang-up signalling negotiation to the VoLTE network through the IMS protocol stack entity, the TCP/IP protocol stack entity and the wireless protocol stack entity.

In step 309, after completing the hang-up signalling processing, the VoLTE network notifies the local-end and the remote-end VoLTE function control modules that the VoLTE voice call is disconnected and the VoLTE voice call hang-up signalling negotiation is completed through the wireless protocol stack entity, the TCP/IP protocol stack entity and the IMS protocol stack entity.

In step 310, the VoLTE function control module disables the audio coding/decoding module to make the audio coding/decoding module exit the VoLTE voice calling state, and at the same time, notifies the VoLTE interface interaction module to prompt the user that the VoLTE voice call is ended.

### Fourth, answering VoLTE voice call procedure

In step 401, in the VoLTE voice function available state, the VoLTE network notifies the VoLTE function control module that there is a new incoming VoLTE voice call through the wireless protocol stack entity, the TCP/IP protocol stack entity and the IMS protocol stack entity.

In step 402, the VoLTE function control module notifies the VoLTE interface interaction module to prompt that there is an incoming VoLTE voice call.

In step 403, the user answers the incoming call through the VoLTE interface interaction module. The VoLTE interface interaction module notifies the VoLTE function control module that the user answers the incoming call, and at the same time transfers the interface into a calling interface.

In step 404, the VoLTE function control module notifies the VoLTE network that the user answers the VoLTE voice call through the IMS protocol stack entity, the TCP/IP protocol stack entity and the wireless protocol stack entity.

In step 405, at the same time, the VoLTE function control module enables the audio coding/encoding module and performs VoLTE voice call multimedia interaction, and the IMS protocol stack entity continuously splits the audio multimedia data packages transmitted from the VoLTE network and transmits to the voice coding/decoding module for audio decoding and transmits to the earphone/loudspeaker audio device for playing. At the same time, the voice coding/decoding module continuously codes the voice data transmitted from the local-end MIC audio device and then transmits the coded voice data to the IMS protocol stack entity, and the IMS protocol stack entity packages the coded voice data as an audio multimedia data package and finally transmits to the VoLTE network. The remote-end VoLTE mobile terminal performs a similar operation and realizes the VoLTE voice call between the local-end user and the remote-end user.

In step 406, during communication, the local-end user initiates a hang-up VoLTE voice call request through the VoLTE interface interaction module.

In step 407, the VoLTE interface interaction module notifies the VoLTE function control module that the user hangs up the call. The VoLTE function control module initiates VoLTE voice call hang-up signalling negotiation to the VoLTE network through the IMS protocol stack entity, the TCP/IP protocol stack entity and the wireless protocol stack entity.

In step 408, after completing the hang-up signalling processing, the VoLTE network notifies the local-end and the remote-end VoLTE function control modules that the VoLTE voice call is disconnected and the VoLTE voice call hang-up signalling negotiation is completed through the wireless protocol stack entity, the TCP/IP protocol stack entity and the IMS protocol stack entity.

In step 409, the VoLTE function control module disables the audio coding/decoding module to make the audio coding/decoding module exit the VoLTE voice call state, and at the same time, notifies the VoLTE interface interaction module to prompt the user that the VoLTE voice call is ended.

In embodiment three, a data card includes the CP mentioned in embodiment one.

The CP further includes:
an audio device arranged to be connected to the voice coding/decoding module and interact control messages and audio data.

Fig. 4 is a first product scheme of a VoLTE voice function data card. It is assumed that the original data card PC software supports CS voice function. The LTE MODEM CP structure in the scheme of Fig. 4 is the same as that in Fig. 3, except that the VoLTE function control module changes from being connected to the VoLTE interface interaction module to being connected to the PC software VoLTE function module in the PC.
1) The LTE MODEM CP chip embedded with the VoLTE voice function uses an AT command interface for the outside, compatible with the CS call standard command, and thus the interface with the PC may still use the original AT command and may be expanded simply (displaying the VoLTE voice function available state).
2) The displaying of the VoLTE voice function module available state is supported in the data card PC software, that is, the VoLTE voice function development can be completed without changing the original call relevant interface and function. Therefore, there are very few overall workloads.

In embodiment four, a data card includes a CP mentioned in embodiment one.

The CP further includes:
a USB interface connected to the voice coding/decoding module and interacting audio data and also connected to a USB interface of other device.

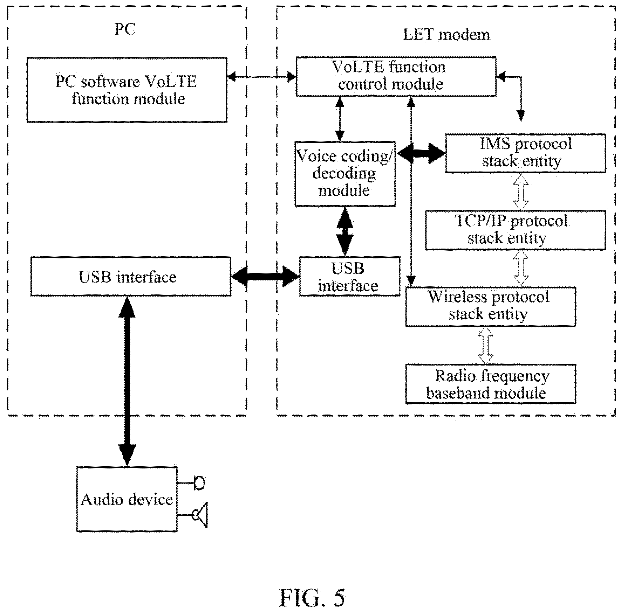

Fig. 5 is a second product scheme of a VoLTE voice function data card. It is assumed that the LTE MODEM data card has no audio device (MIC, earphone, loudspeaker) and the original data card PC software supports CS voice function and the MIC and earphone/loudspeaker external to the PC are used. The difference between the scheme in Fig. 5 and the scheme in Fig. 4 lies in that the voice coding/decoding module is no longer connected to the audio device but changes to being connected to the USB interface. The USB interface in the CP is connected to the USB interface in the PC, and the USB interface in the PC is connected to the audio device.
1) The VoLTE function uses an AT command interface for the outside, compatible with the CS call standard command, and thus the interface with the PC may still use the original AT command interface and be expanded simply (displaying the VoLTE voice function available state).
2) The displaying of the VoLTE voice function module available state is supported in the data card PC software, that is, the VoLTE voice function development can be completed without changing the original call relevant interface and function.
3) A pair of end points is added to the connection between the data card and the PC USB for transmitting PCM voice data, and at the same time, the PC side needs to transfer corresponding voice data to an external audio device (MIC, earphone, loudspeaker). There are very few overall workloads.

In embodiment V, a method for implementing VoLTE includes the following steps.

A VoLTE function control module in a CP interacts control messages with a voice coding/decoding module, a wireless protocol stack entity and an IMS protocol stack entity in the CP respectively.

The wireless protocol stack entity interacts TCP/IP data with a TCP/IP protocol stack entity in the CP.

The TCP/IP protocol stack entity interacts TCP/IP data with the IMS protocol stack entity.

The IMS protocol stack entity interacts audio data with the voice coding/decoding module.

The voice coding/decoding module interacts audio data and control messages with an external audio device.

The other implementation details in this embodiment can refer to embodiments one to four.

Those skilled in the art may understand that all or some steps of the above embodiments may be implemented by computer program procedures which may be stored in a computer-readable storage medium and executed on a corresponding hardware platform (such as system, apparatus, device and so on), and when being executed, include one of the steps of the method embodiment or a combination thereof.

In an exemplary embodiment, all or some steps of the above embodiments may also be implemented with an integrated circuit, and these steps may be made into a single integrated circuit module respectively or some modules or steps may be made into a single integrated circuit module. As such, the present invention is not limited to any specific hardware and software combination.

Various devices/functional modules/functional units in the above embodiments may be implemented with a general-purpose computer device which can be integrated on a single computer device and may also be distributed on a network of a plurality of computer devices.

Various devices/functional modules/functional units in the above embodiments may be stored in a computer-readable storage medium if being implemented with software functional modules and sold or used as independent products. The above-mentioned computer-readable storage medium may be a read-only memory, magnetic disk or optical disk and so on.

### Industrial Applicability

The embodiments can achieve the purpose of saving electricity, and can be rapidly transplanted on different platforms, and thus can support different product modalities, can reduce the high-speed communication of TCP/IP data packages between the AP and the CP, and reduce the communication device requirements between the AP and the CP.

## Claims

1. A communication processor, CP, applied to a long term evolution, LTE, modem, comprising: a wireless protocol stack entity; and
a voice over long term evolution, VoLTE, function control module, a voice coding/decoding module, an Internet Protocol Multimedia Subsystem, IMS, protocol stack entity, and a Transmission Control Protocol/Internet Protocol, TCP/IP, protocol stack entity, wherein,
the VoLTE function control module is arranged to interact control messages with the voice coding/decoding module, the IMS protocol stack entity, and the wireless protocol stack entity respectively; the TCP/IP protocol stack entity is arranged to interact TCP/IP data with the wireless protocol stack entity and the IMS protocol stack entity respectively; and the voice coding/decoding module is arranged to interact audio data and a control message with an external voice device, and interact audio data with the IMS protocol stack entity; **characterized in that**,
the VoLTE function control module is arranged to send a control message for indicating to display a specific content through an interface of the LTE modem and receive a control message for indicating to perform a specific VoLTE operation; the interface of the LTE modem is a Attention, AT, command interface.

2. A mobile terminal, comprising: an application processor, AP;
and
the communication processor, CP, according to claim 1;
wherein the AP comprises: a VoLTE interface interaction module; and
the VoLTE interface interaction module is arranged to interact a control message with the VoLTE function control module.

3. The mobile terminal according to claim 2, wherein,
the VoLTE function control module is arranged to: notify the wireless protocol stack entity to receive a VoLTE network access notification, and establish a connection link of IMS specific data when receiving the VoLTE network access notification sent by the wireless protocol stack entity, register a mobile terminal VoLTE voice function to the VoLTE network through the IMS specific data connection, and notify the VoLTE interface interaction module to display a VoLTE voice function available state of a mobile terminal after completing registration.

4. The mobile terminal according to claim 2, wherein,
the VoLTE function control module is arranged to: notify the wireless protocol stack entity to receive a notification that the mobile terminal leaves a VoLTE network service area and the IMS specific data connection is disconnected; initiate a VoLTE voice function cancellation procedure of a mobile terminal after receiving the notification of leaving the VoLTE network service area sent by the wireless protocol stack entity; notify the VoLTE interface interaction module to remove displaying of the VoLTE voice function available state after completing cancellation; and notify the VoLTE interface interaction module to remove the displaying of the VoLTE voice function available state after receiving the notification that the IMS specific data connection is disconnected.

5. The mobile terminal according to claim 2, wherein,
the VoLTE interface interaction module is arranged to notify the VoLTE function control module when a user initiates a VoLTE voice call operation or when the user initiates a hang-up VoLTE call request operation; and
the VoLTE function control module is arranged to, when receiving the notification of initiating the VoLTE voice call operation, initiate VoLTE voice call IMS protocol signalling negotiation to the VoLTE network through the IMS protocol stack entity, the TCP/IP protocol stack entity and the wireless protocol stack entity; notify the VoLTE interface interaction module to display a VoLTE voice call connected state after receiving the notification sent by the VoLTE network through the TCP/IP protocol stack entity, the wireless protocol stack entity and the IMS protocol stack entity that the remote-end user has answered the VoLTE voice call and enable the audio coding/decoding module; when receiving the notification of hanging up the VoLTE voice call operation, initiate VoLTE voice call hang-up signalling negotiation to the VoLTE network through the IMS protocol stack entity, the wireless protocol stack entity and the TCP/IP protocol stack entity; disable the audio coding/decoding module and notify the VoLTE interface interaction module to prompt the user that the VoLTE voice call is ended after receiving the notification sent by the VoLTE network through the TCP/IP protocol stack entity, the wireless protocol stack entity and the IMS protocol stack entity that the VoLTE voice call is disconnected; and
the audio coding/decoding module is arranged to: perform audio decoding on an audio multimedia data package transmitted by the VoLTE network and split by the IMS protocol stack entity and then transmit to the connected audio device; and code the voice transmitted by the connected audio device and then transmit to the IMS protocol stack entity, and package the coded voice as an audio multimedia data package to transmit to the VoLTE network.

6. The mobile terminal according to claim 2, wherein,
the VoLTE function control module is arranged to, after receiving a notification of a VoLTE voice incoming call sent by the VoLTE network through the wireless protocol stack entity, the TCP/IP protocol stack entity and the IMS protocol stack entity, notify the VoLTE interface interaction module to prompt that there is a VoLTE voice incoming call; after receiving a notification sent by the VoLTE interface interaction module that the user has answered, notify the user of the VoLTE network to answer the VoLTE voice call through the IMS protocol stack entity, the TCP/IP protocol stack entity and the wireless protocol stack entity, and enable the audio coding/decoding module; and
the audio coding/decoding module is arranged to: perform audio decoding on an audio multimedia data package transmitted by the VoLTE network and split by the IMS protocol stack entity and then transmit to the connected audio device; and code the voice transmitted by the connected audio device and then transmit to the IMS protocol stack entity, and package the coded voice as an audio multimedia data package by the IMS protocol stack entity to transmit to the VoLTE network.

7. A data card, comprising:
the communication processor, CP, according to claim 1;
wherein, the CP further comprises: an audio device arranged to be connected to the voice coding/decoding module to interact a control message and audio data.

8. A data card, comprising:
the communication processor, CP, according to claim 1;
wherein, the CP further comprises: a USB interface arranged to be connected to the voice coding/decoding module and interact audio data, and also arranged to be connected to a USB interface of other device.

9. A method of implementing voice over long term evolution, VoLTE, comprising:
a VoLTE function control module in a communication processor, CP, interacting control messages with a voice coding/decoding module, a wireless protocol stack entity and an Internet Protocol Multimedia Subsystem IMS protocol stack entity in the CP respectively;
the wireless protocol stack entity interacting TCP/IP data with a Transmission Control Protocol/Internet Protocol, TCP/IP, protocol stack entity in the CP;
the TCP/IP protocol stack entity interacting TCP/IP data with the IMS protocol stack entity;
the IMS protocol stack entity interacting audio data with the voice coding/decoding module; and
the voice coding/decoding module interacting audio data and control messages with an external audio device; **characterized in that**,
the VoLTE function control module sends a control message for indicating to display a specific content through an interface of the LTE modem and receives a control message for indicating to perform a specific VoLTE operation; the interface of the LTE modem is a Attention, AT, command interface.

10. A computer program comprising instructions that, when executed on a corresponding hardware platform, causes the hardware platform to perform all the steps of the method according to claim 9.

11. A computer-readable storage medium storing the computer program according to claim 10.

## Patentansprüche

1. Kommunikationsprozessor, CP, der auf ein LTE-Modem angewendet wird, umfassend: ein Funkprotokoll-Stack-Element und
ein VoLTE-Funktionssteuermodul (Voice over Long Term Evolution), ein Sprachcodier-/-decodiermodul, ein IMS-Protokoll-Stack-Element (Internet Protocol Multimedia Subsystem) und ein TCP/IP-Protkoll-Stack-Element (Transmission Control Protocol/Internet Protocol), wobei
das VoLTE-Funktionssteuermodul derart angeordnet ist, dass es Steuerungsnachrichten jeweils mit dem Sprachcodier-/-decodiermodul, dem IMS-Protokoll-Stack-Element bzw. dem Funkprotokoll-Stack-Element in Interaktion bringt, das TCP/IP-Protokoll-Stack-Element derart angeordnet ist, dass es TCP/IP-Daten jeweils mit dem Funkprotokoll-Stack-Element bzw. dem IMS-Protokoll-Stack-Element in Interaktion bringt und das Sprachcodier-/-decodiermodul derart angeordnet ist, dass es Audiodaten und eine Steuerungsnachricht mit einem externen Sprachgerät in Interaktion bringt und Audiodaten mit dem IMS-Protokoll-Stack-Element in Interaktion bringt, **dadurch gekennzeichnet, dass**
das VoLTE-Funktionssteuermodul derart angeordnet ist, dass es eine Steuerungsnachricht sendet, um anzugeben, dass ein konkreter Inhalt über eine Schnittstelle des LTE-Modems anzuzeigen ist, und eine Steuerungsnachricht empfängt, um anzugeben, dass eine konkrete VoLTE-Operation auszuführen ist, die Schnittstelle des LTE-Modems eine AT-Befehlsschnittstelle ist.

2. Mobiles Endgerät, umfassend: einen Anwendungsprozessor, AP,
und
den Kommunikationsprozessor, CP, nach Anspruch 1,
wobei der AP umfasst: ein VoLTE-Schnittstellen-Interaktionsmodul und
das VoLTE-Schnittstellen-Interaktionsmodul derart angeordnet ist, dass es eine Steuerungsnachricht mit dem VoLTE-Funktionssteuermodul in Interaktion bringt.

3. Endgerät nach Anspruch 2, wobei:
das VoLTE-Funktionssteuermodul derart angeordnet ist, dass: es dem Funkprotokoll-Stack-Element mitteilt, dass es eine VoLTE-Netzwerkzugangsmeldung empfangen soll, und beim Empfang der vom Funkprotokoll-Stack-Element gesendeten VoLTE-Netzwerkzugangsmeldung eine Kommunikationsverbindung für IMS-spezifische Daten herstellt, eine VoLTE-Sprachfunktion eines mobilen endgeräts über die IMS-spezifische Datenverbindung beim VoLTE-Netzwerk anmeldet und dem VoLTE-Schnittstellen-Interaktionsmodul mitteilt, dass ein Verfügbarkeitszustand einer VoLTE-Sprachfunktion eines mobilen Endgeräts nach Abschluss der Anmeldung anzeigen soll.

4. Endgerät nach Anspruch 2, wobei:
das VoLTE-Funktionssteuermodul derart angeordnet ist, dass: es dem Funkprotokoll-Stack-Element mitteilt, dass eine Meldung darüber zu empfangen ist, dass das mobile Endgerät den Bereich des VoLTE-Netzwerkdienstes verlässt und die IMS-spezifische Datenverbindung detrennt wird, nach dem Empfang der vom Funkprotokoll-Stack-Element gesendeten Meldung über das Verlassen des Bereichs des VoLTE-Netzwerkdienstes eine Prozedur zum Abbrechen einer VoLTE-Sprachfunktion eines mobilen Endgeräts einleitet, dem VoLTE-Schnittstellen-Interaktionsmodul mitteilt, dass nach Abschluss des Abbruchs die Anzeige des Verfügbarkeitszustands der VoLTE-Sprachfunktion einzustellen ist, und dem VoLTE-Schnittstellen-Interaktionsmodul mitteilt, dass nach Empfang der Meldung, dass die IMS-spezifische Datenverbindung getrennt ist, die Anzeige des Verfügbarkeitszustands der VoLTE-Sprachfunktion einzustellen ist.

5. Endgerät nach Anspruch 2, wobei:
das VoLTE-Schnittstellen-Interaktionsmodul derart angeordnet ist, dass es dem VoLTE-Funktionssteuermodul die Einleitung einer VoLTE-Sprachanrufoperation durch einen Nutzer oder die Einleitung einer VoLTE-Anrufbeendungsoperation durch einen Nutzer mitteilt und
das VoLTE-Funktionssteuermodul derart angeordnet ist, dass es beim Empfang der Meldung über die Einleitung der VoLTE-Sprachanrufoperation die Aushandlung der IMS-Protokollsignalisierung eines VoLTE-Sprachanrufs mit dem VoLTE-Netzwerk über das IMS-Protokoll-Stack_Element, das TCP/IP-Protokoll-Sack-Element und das Funkprotokoll-Stack-Element einleitet, dem VoLTE-Schnittstellen-Interaktionsmodul mitteilt, dass nach dem Empfang der vom VoLTE-Netzwerk über das TCP/IP-Protokoll-Stack-Element, das Funkprotokoll-Stack-Element und das IMS-Protokoll-Sack-Element gesendete Meldung, dass der Nutzer am fernen Ende den VoLTE-Sprachanruf beantwortet hat, ein verbundener Zustand eines VoLTE-Sprachanrufs anzuzeigen und das Audiocodier-/-decodiermodul zu aktivieren ist, bei Empfang der Meldung über die Beendung der VoLTE-Sprachanrufoperation die Aushandlung der Signalisierung über die Beendung des VoLTE-Sprachanrufs mit dem VoLTE-Netzwerk über das IMS-Protokoll-Stack-Element, das Funkprotokoll-Sack-Element und das TCP/IP-Protokoll-Stack-Element einleitet, das Audiocodier-/-decodiermodul deaktiviert und dem VoLTE-Schnittstellen-Interaktionsmodul mitteilt, dass nach dem Empfang der vom VoLTE-Netzwerk über das TCP/IP-Protokoll-Stack-Element, das Funkprotokoll-Stack-Element und das IMS-Protokoll-Sack-Element gesendete Meldung, dass der VoLTE-Sprachanruf beendet ist, dem Nutzer mitzuteilen ist, dass der VoLTE-Sprachanruf beendet ist,
das Audiocodier-/-decodiermodul derart angeordnet ist, dass: eine Audiodecodierung an einem vom VolTE-Netzwerk gesendeten und vom IMS-Protokoll-Stack-Element aufgeteilten Audio-Multimedia-Datenpaket vornimmt und dieses an das verbundene Audiogerät sendet und die vom verbundenen Audiogerät gesendete Sprache codiert und diese an das IMS-Protokoll-Stack-Element sendet und die codierte Sprache als Audio-Multimedia-Datenpaket zur Übertragung an das VoLTE-Netzwerk verpackt.

6. Endgerät nach Anspruch 2, wobei:
das VoLTE-Funktionssteuermodul derart angeordnet ist, dass es nach dem Empfang einer vom VoLTE-Netzwerk über das Funkprotokoll-Stack-Element, das TCP/IP-Protokoll-Stack-Element und das IMS-Protokoll-Stack-Element gesendeten Mitteilung über einen eingehenden VoLTE-Sprachanruf dem VoLTE-Schnittstellen-Interaktionsmodul mitteilt, dass ein eingehender VoLTE-Sprachanruf zu melden ist, nach dem Empfang einer vom VoLTE-Schnittstellen-Interaktionsmodul gesendeten Mitteilung, dass der Nutzer den Anruf beantwortet hat, dem Nutzer des VoLTE-Netzwerks über das IMS-Protokoll-Stack-Element, das TCP/IP-Protokoll-Stack-Element und das Funkprotokoll-Stack-Element mitteilt, dass der VoLTE-Sprachanruf zu beantworten ist, und das Audiocodier-/-decodiermodul aktiviert und
das Audiocodier-/-decodiermodul derart angeordnet ist, dass: eine Audiodecodierung an einem vom VolTE-Netzwerk gesendeten und vom IMS-Protokoll-Stack-Element aufgeteilten Audio-Multimedia-Datenpaket vornimmt und dieses an das verbundene Audiogerät sendet und die vom verbundenen Audiogerät gesendete Sprache codiert und diese an das IMS-Protokoll-Stack-Element sendet und die codierte Sprache durch das IMS-Protokoll-Stack-Element als Audio-Multimedia-Datenpaket zur Übertragung an das VoLTE-Netzwerk verpackt.

7. Datenkarte, umfassend:
den Kommunikationsprozessor, CP, nach Anspruch 1,
wobei der CP ferner umfasst:
ein Audiogerät, das derart angeordnet ist, dass es an das Sprachcodier-/-decodiermodul angeschlossen werden kann, um eine Steuerungsnachricht und Audiodaten in Interaktion zu bringen.

8. Datenkarte, umfassend:
den Kommunikationsprozessor, CP, nach Anspruch 1,
wobei der CP ferner umfasst:
eine USB-Schnittstelle, die derart angeordnet ist, dass sie an das Sprachcodier-/-decodiermodul angeschlossen werden und Audiodaten in Interaktion bringen kann, und ferner derart angeordnet ist, dass sie an eine USB-Schnittstelle eines anderen Geräts angeschlossen werden kann.

9. Verfahren zum Ausführen von VoLTE (Voice over Long Term Evolution), umfassend:
ein VoLTE-Funktionssteuermodul in einem Kommunikationsprozessor, CP, das Steuerungsnachrichten mit einem Sprachcodier-/-decodiermodul, einem Funkprotokoll-Stack-Element bzw. einem IMS-Protokoll-Stack-Element im CP in Interaktion bringt,
wobei das Funkprotokoll-Stack-Element TCP/IP-Daten mit einem TCP/IP-Protokoll-Stack-Element im CP in Interaktion bringt,
das TCP/IP-Protokoll-Stack-Element TCP/IP-Daten mit dem IMS-Protokoll-Stack-Element in Interaktion bringt,
das IMS-Protokoll-Stack-Element Audiodaten mit dem Sprachcodier-/-decodiermodul in Interaktion bringt und
das Sprachcodier-/-decodiermodul Audiodaten und Steuerungsnachrichten mit einem externen Audiogerät in Interaktion bringt, **dadurch gekennzeichnet, dass**
das VoLTE-Funktionssteuermodul eine Steuerungsnachricht sendet, um anzugeben, dass ein konkreter Inhalt über eine Schnittstelle des LTE-Modems anzuzeigen ist, und eine Steuerungsnachricht empfängt, um anzugeben, dass eine konkrete VoLTE-Operation auszuführen ist, die Schnittstelle des LTE-Modems eine AT-Befehlsschnittstelle ist.

10. Computerprogramm, umfassend Befehle, die bei Ausführung auf einer entsprechenden Hardware-Plattform die Hardware-Plattform dazu veranlasst, alle Schritte des Verfahrens nach Anspruch 9 auszuführen.

11. Computerlesbarer Datenträger, auf dem das Computerprogramm nach Anspruch 10 gespeichert ist.

## Revendications

1. Processeur de communication, CP, appliqué à un modem de technologie d'évolution à long terme, LTE, comprenant :
une entité de pile de protocoles sans fil ; et
un module de commande de fonction « voix sur technologie d'évolution à long terme », VoLTE, un module de codage/décodage vocal, une entité de pile de protocoles de sous-système multimédia de protocole Internet, IMS, et une entité de pile de protocoles de type protocole de commande de transmission / protocole Internet, TCP/IP, dans lequel,
le module de commande de fonction VoLTE est agencé de manière à faire interagir des messages de commande avec le module de codage/décodage vocal, l'entité de pile de protocoles de sous-système IMS et l'entité de pile de protocoles sans fil, respectivement ; l'entité de pile de protocoles TCP/IP est agencée de manière à faire interagir des données de protocole TCP/IP avec l'entité de pile de protocoles sans fil et l'entité de pile de protocoles de sous-système IMS, respectivement ; le module de codage/décodage vocal est agencé de manière à faire interagir des données audio et un message de commande avec un dispositif vocal externe, et à faire interagir des données audio avec l'entité de pile de protocoles de sous-système IMS ; **caractérisé en ce que**,
le module de commande de fonction VoLTE est agencé de manière à envoyer un message de commande pour indiquer d'afficher un contenu spécifique à travers une interface du modem LTE, et à recevoir un message de commande pour indiquer de mettre en œuvre une opération VoLTE spécifique ; et l'interface du modem LTE est une interface de commande Attention, AT.

2. Terminal mobile, comprenant :
un processeur d'application, AP ; et
le processeur de communication, CP, selon la revendication 1 ;
dans lequel le processeur AP comprend : un module d'interaction d'interface VoLTE ; et
le module d'interaction d'interface VoLTE est agencé de manière à faire interagir un message de commande avec le module de commande de fonction VoLTE.

3. Terminal mobile selon la revendication 2, dans lequel,
le module de commande de fonction VoLTE est agencé de manière à : notifier à l'entité de pile de protocoles sans fil de recevoir une notification d'accès de réseau VoLTE, et établir une liaison de connexion de données spécifiques de sous-système IMS lors de la réception de la notification d'accès de réseau VoLTE envoyée par l'entité de pile de protocoles sans fil, enregistrer une fonction vocale VoLTE de terminal mobile auprès du réseau VoLTE à travers la connexion de données spécifiques de sous-système IMS, et notifier au module d'interaction d'interface VoLTE d'afficher un état disponible de fonction vocale VoLTE d'un terminal mobile à l'issue de l'enregistrement.

4. Terminal mobile selon la revendication 2, dans lequel,
le module de commande de fonction VoLTE est agencé de manière à : notifier à l'entité de pile de protocoles sans fil de recevoir une notification indiquant que le terminal mobile quitte une zone de service de réseau VoLTE et que la connexion de données spécifiques de sous-système IMS est déconnectée ; initier une procédure d'annulation de fonction vocale VoLTE d'un terminal mobile suite à la réception de la notification du départ de la zone de service de réseau VoLTE envoyée par l'entité de pile de protocoles sans fil ; notifier au module d'interaction d'interface VoLTE de supprimer l'affichage de l'état disponible de fonction vocale VoLTE à l'issue de l'annulation ; et notifier au module d'interaction d'interface VoLTE de supprimer l'affichage de l'état disponible de fonction vocale VoLTE suite à la réception de la notification indiquant que la connexion de données spécifiques de sous-système IMS est déconnectée.

5. Terminal mobile selon la revendication 2, dans lequel,
le module d'interaction d'interface VoLTE est agencé de manière à notifier au module de commande de fonction VoLTE lorsqu'un utilisateur initie une opération d'appel vocal VoLTE ou lorsque l'utilisateur initie une opération de demande de raccrochage d'appel VoLTE ; et
le module de commande de fonction VoLTE est agencé de manière à, lors de la réception de la notification d'initiation de l'opération d'appel vocal VoLTE, initier une négociation de signalisation de protocole de sous-système IMS d'appel vocal VoLTE au niveau du réseau VoLTE, à travers l'entité de pile de protocoles de sous-système IMS, l'entité de pile de protocoles TCP/IP et l'entité de pile de protocoles sans fil ; notifier au module d'interaction d'interface VoLTE d'afficher un état connecté d'appel vocal VoLTE suite à la réception de la notification, envoyée par le réseau VoLTE à travers l'entité de pile de protocoles TCP/IP, l'entité de pile de protocoles sans fil et l'entité de pile de protocoles de sous-système IMS, indiquant que l'utilisateur final distant a répondu à l'appel vocal VoLTE, et activer le module de codage/décodage audio ; lors de la réception de la notification de raccrochage de l'opération d'appel vocal VoLTE, initier une négociation de signalisation de raccrochage d'appel vocal VoLTE au niveau du réseau VoLTE, à travers l'entité de pile de protocoles de sous-système IMS, l'entité de pile de protocoles sans fil et l'entité de pile de protocoles TCP/IP ; désactiver le module de codage/décodage audio et notifier au module d'interaction d'interface VoLTE d'indiquer à l'utilisateur de mettre fin à l'appel vocal VoLTE suite à la réception de la notification, envoyée par le réseau VoLTE, à travers l'entité de pile de protocoles TCP/IP, l'entité de pile de protocoles sans fil et l'entité de pile de protocoles de sous-système IMS, indiquant que l'appel vocal VoLTE est déconnecté ; et
le module de codage/décodage audio est agencé de manière à : mettre en œuvre un décodage audio sur un paquet de données multimédias audio transmis par le réseau VoLTE et divisé par l'entité de pile de protocoles de sous-système IMS, et le transmettre ensuite au dispositif audio connecté ; et coder le contenu vocal transmis par le dispositif audio connecté et le transmettre ensuite à l'entité de pile de protocoles de sous-système IMS, et mettre en paquet le contenu vocal codé sous la forme d'un paquet de données multimédias audio à transmettre au réseau VoLTE.

6. Terminal mobile selon la revendication 2, dans lequel,
le module de commande de fonction VoLTE est agencé de manière à, suite à la réception d'une notification d'un appel entrant vocal VoLTE, envoyée par le réseau VoLTE, à travers l'entité de pile de protocoles sans fil, l'entité de pile de protocoles TCP/IP et l'entité de pile de protocoles de sous-système IMS, notifier au module d'interaction d'interface VoLTE d'indiquer qu'il existe un appel entrant vocal VoLTE ; suite à la réception d'une notification, envoyée par le module d'interaction d'interface VoLTE, indiquant que l'utilisateur a répondu, notifier à l'utilisateur du réseau VoLTE de répondre à l'appel vocal VoLTE à travers l'entité de pile de protocoles de sous-système IMS, l'entité de pile de protocoles TCP/IP et l'entité de pile de protocoles sans fil, et activer le module de codage/décodage audio ; et
le module de codage/décodage audio est agencé de manière à : mettre en œuvre un décodage audio sur un paquet de données multimédias audio transmis par le réseau VoLTE et divisé par l'entité de pile de protocoles de sous-système IMS, et le transmettre ensuite au dispositif audio connecté ; et coder le contenu vocal transmis par le dispositif audio connecté et le transmettre ensuite à l'entité de pile de protocoles de sous-système IMS, et emballer le contenu vocal codé sous la forme d'un paquet de données multimédias audio, par le biais de l'entité de pile de protocoles de sous-système IMS, en vue de le transmettre au réseau VoLTE.

7. Carte de données, comprenant :
le processeur de communication, CP, selon la revendication 1 ;
dans laquelle, le processeur CP comprend en outre :
un dispositif audio agencé de manière à être connecté au module de codage/décodage vocal en vue de faire interagir un message de commande et des données audio.

8. Carte de données, comprenant :
le processeur de communication, CP, selon la revendication 1 ;
dans laquelle, le processeur CP comprend en outre :
une interface USB agencée de manière à être connectée au module de codage/décodage vocal et à faire interagir des données audio, et également agencée de manière à être connectée à une interface USB d'un autre dispositif.

9. Procédé de mise en œuvre d'une fonction « voix sur technologie d'évolution à long terme », VoLTE, comprenant :
un module de commande de fonction VoLTE dans un processeur de communication, CP, faisant interagir des messages de commande avec un module de codage/décodage vocal, une entité de pile de protocoles sans fil et une entité de pile de protocoles de sous-système multimédia de protocole Internet, IMS, dans le processeur CP, respectivement ;
l'entité de pile de protocoles sans fil faisant interagir des données de protocole TCP/IP avec une entité de pile de protocoles de protocole de commande de transmission/protocole Internet, TCP/IP, dans le processeur CP ;
l'entité de pile de protocoles TCP/IP faisant interagir des données de protocole TCP/IP avec l'entité de pile de protocoles de sous-système IMS ;
l'entité de pile de protocoles de sous-système IMS faisant interagir des données audio avec le module de codage/décodage vocal ; et
le module de codage/décodage vocal faisant interagir des données audio et des messages de commande avec un dispositif audio externe ; **caractérisé en ce que**,
le module de commande de fonction VoLTE envoie un message de commande pour indiquer d'afficher un contenu spécifique à travers une interface du modem LTE, et reçoit un message de commande pour indiquer de mettre en œuvre une opération VoLTE spécifique ; dans lequel l'interface du modem LTE est une interface de commande Attention, AT.

10. Programme informatique comprenant des instructions qui, lorsqu'elles sont exécutées sur une plateforme matérielle correspondante, amènent la plateforme matérielle à mettre en œuvre toutes les étapes du procédé selon la revendication 9.

11. Support de stockage lisible par ordinateur stockant le programme informatique selon la revendication 10.
